# EUROPÄISCHE PATENTANMELDUNG

(11) **EP 0 941 793 A2**
(43) Veröffentlichungstag der Anmeldung: **15.09.1999**
(21) Anmeldenummer: 99810121.6
(22) Anmeldetag: 12.02.1999
(51) Int. Cl.: B23B 51/00

(54) **Bohrwerkzeug**

(30) Priorität: 10.03.1998 DE 19810193
(71) Anmelder: HILTI Aktiengesellschaft, 9494 Schaan (LI)
(72) Erfinder: Kleine, Werner, 28832 Achim (DE); Bongers-Ambrosius, Hans-Werner, 81477 München (DE)
(74) Vertreter: Wildi, Roland

(57) **Zusammenfassung**

Ein Bohrwerkzeug zur Erstellung von Bohrlöchern in Gestein, Beton, Mauerwerk und dergleichen weist einen hülsenförmigen Schaft (12) auf, der eine an beiden Endabschnitten des Schafts in Öffnungen (14) mündenden, axial verlaufende Durchgangsbohrung besitzt. An seinem einen Längsende ist der hülsenförmige Schaft (12) mit einem Einsteckende für den Anschluss an ein Bohrgerät ausgestattet. Am gegenüberliegenden freien Vorderende trägt er einen Schneiden (16) aufweisenden Bohrkopf (15) aus Schneidwerkstoff, der in wenigstens einem, vorzugsweise etwa radial verlaufenden Schlitz (19) geführt ist. Der in den Schaft (12) eingebettete Abschnitt des Bohrkopfs (15) ist über einen wesentlichen Teil seines Umfangs in flächiger Anlage zum Material des Schaftes und fest mit dem Schaftmaterial verbunden.

## Beschreibung

Die Erfindung betrifft ein Bohrwerkzeug gemäss dem Oberbegriff des Patentanspruchs 1.

Neben den bekannten Bohrwerkzeugen zur Erstellung von Bohrlöchem in Gestein, Beton, Mauerwerk und dergleichen, bei denen das abgetragene Bohrklein mittels wenigstens einer am Schaft des mit Schneiden versehenen Bohrwerkzeugs wendelförmig verlaufenden Abfuhmut aus dem Bohrloch abtransportiert wird, sind in der Vergangenheit auch sogenannte Saugbohrer vorgeschlagen worden. Sie bestehen aus einem mit einer axialen Bohrung ausgestatteten Bohrwerkzeug, das über einen Adapter und ein Kupplungsteil an eine Unterdruck erzeugende Vorrichtung, insbesondere einen Staubsauger oder dergleichen, angeschlossen ist. Saugbohrer sollen über eine Absaugung des im Betrieb entstehenden Bohrkleins eine höhere Bohrleistung erbringen und zu einer besseren Reinigung des Bohrloches führen. Ein derartiger Saugbohrer ist beispielsweise in der DE-A-27 56 140 beschrieben. Dieser bekannte Saugbohrer weist einen mit einer axialen Saugbohrung versehenen Schaft auf, dessen eines Ende in einen Adapter eingesetzt ist, der von einem drehfesten Kupplungsteil umgeben ist. Am gegenüberliegenden Ende des Schaftes ist ein Kopfteil mit eingesetzten Hartmetall-Schneidplättchen lösbar eingeschraubt. Die Saugbohrung steht mit einer Bohrung im Kopfteil in Verbindung, die zu beiden Seiten des Schneidplättchens münden. Über den Adapter und das Kupplungsteil ist die Saugbohrung mit einem Staubsauger verbunden. Im Betrieb wird das an den Schneiden entstehende Bohrklein durch den Bohrkopf und die Saugbohrung in den Staubsauger transportiert.

Dieser bekannte Saugbohrer weist ein auswechselbares Kopfteil auf, das in den Schaft eingeschraubt ist. Bei übermässiger Abnützung des in das Kopfteil eingesetzten Hartmetallschneidplättchens oder bei Verstopfung der Bohrungen soll das Kopfteil austauschbar sein. Durch die insbesondere bei Hammerbohrgeräten im Betrieb auftretenden grossen Einzelschlagenergien der Axialschläge wird das Schraubgewinde im Schaft und am Kopfteil sehr stark belastet. Dadurch kann es vorkommen, dass das Gewinde ausgeschlagen wird und das Kopfteil nicht mehr sicher befestigbar ist. Andererseits kann es vorkommen, dass durch die Rotation des Bohrwerkzeugs im Betrieb die Schraubverbindung zwischen dem Kopfteil und dem Schaft so fest angezogen wird, dass sie bei Bedarf nur mehr unter grösster Kraftaufwendung oder gar nicht mehr lösbar ist. Auch erweist sich die Fertigung dieses bekannten Saugbohrers als relativ aufwendig. Dabei stellt vor allem die Herstellung der axialen Bohrung in dem aus einem relativ langen Stahlstab bestehenden Schaft hohe Anforderungen an die Fertigungstechnik.

Um diesen Nachteilen der bekannten Saugbohrer abzuhelfen und die Fertigung von Saugbohrem zu vereinfachen, ist in der DE-U-79 08 923 vorgeschlagen, den Schaft des Bohrwerkzeugs aus einer Stahlhülse zu fertigen. Ein Ende des hülsenförmigen Schaftes ist mit einem Adapter verbunden, der von einem drehfesten Kupplungsteil umgeben ist, an das beispielsweise ein Staubsauger anschliessbar ist. In axialer Verlängerung des Schaftes ist der Adapter mit einem Einsteckende für den Anschluss des Bohrwerkzeugs an ein Bohrgerät ausgestattet. Die Stahlhülse ist an ihrem gegenüberliegenden Vorderende mit axialen Schlitzen versehen, die kreuzartig angeordnet sind. In diese Axialschlitze sind die Schneiden eines einstückig gesinterten Hartmetallschneidenkreuzes eingeschoben und befestigt. Die Gestalt der Schneiden und der Innendurchmesser des hülsenförmigen Schaftes sind dabei so ausgewählt, dass zwischen den Schneiden und der Innenwandung des Schaftes Öffnungen verbleiben, die mit dem axialen Kanal im Schaft in Verbindung stehen.

Das aus der DE-U-79 08 923 bekannte Bohrwerkzeug weist im Kopfbereich eine relativ geringe Stabilität auf. Das einstückig aus Hartmetall gesinterte Schneidenkreuz ist nur in den axialen Schlitzen von der Stahlhülse unterstützt. Die beim drehend schlagenden Abbau des Untergrunds auftretenden Scherkräfte müssen nahezu vollumfänglich von dem Schneidenkreuz aufgenommen werden. Dabei kann sich das Schneidenkreuz aus den Schlitzführungen lösen oder es kann gar zu einem Versagen des Hartmetalls kommen. Die Gestalt der kreuzförmig angeordneten Schneiden ist derart gewählt, dass zwischen den Schneiden und der Innenwandung des Schaftes Öffnungsbereiche verbleiben, die sich in axialer Fortsetzung des axialen Kanals erstrecken. Die Schneiden sind daher leistenartig ausgebildet und weisen eine zum Kreuzungsbereich zunehmende Höhe auf. Auf diese Weise bilden die Einzelschneiden im Kreuzungsbereich eine Schneidspitze, die ohne jegliche Unterstützung den axialen Kanal überbrückt. Im Betrieb ist die vorstehende Schneidspitze der grössten Belastung durch die axialen Schläge unterworfen. Durch die gewählte Ausbildung des Schneidenkreuzes kann es insbesondere in Verbindung mit Hammerbohrgeräten mit relativ grossen Einzelschlagenergien der axialen Schläge vorkommen, dass das einstückig aus Hartmetall gesinterte Schneidenkreuz bricht. Die von den Schneiden und der Innenwandung der Hülse berandeten Öffnungen sind axial orientiert. Im Betrieb kann es vorkommen, dass das Kopfende des Saugbohrers vollständig in das abgebaute Bohrklein eintaucht. Dann reicht die Saugwirkung vielfach nicht mehr aus, um das Bohrklein schnell genug abzusaugen und die Öffnungen können verstopfen.

Aufgabe der vorliegenden Erfindung ist es, diesen Nachteilen der Bohrwerkzeuge des Stands der Technik abzuhelfen. Es soll ein Bohrwerkzeug der gattungsgemässen Art geschaffen werden, das einen hülsenförmigen Schaft und einen vollständig aus Schneidwerkstoff, vorzugsweise Hartmetall, gesinterten Bohrkopf aufweist. Das Bohrwerkzeug soll derart konstruiert sein, dass die Gefahr eines Versagens bzw. eines Brechens des Bohrkopfes verringert ist. Dabei soll die Montage des Bohrkopfes einfach und zuverlässig erfolgen können. Ein Verstopfen der mit dem Durchgangskanal im Schaft kommunizierenden Bohrungen im vorderen Endabschnitt des Schafts durch im Betrieb abgebautes Bohrklein soll verhindert werden.

Die Lösung dieser Aufgaben besteht in einem Bohrwerkzeug mit den im kennzeichnenden Abschnitt des Patentanspruchs 1 angeführten Merkmalen. Ein Bohrwerkzeug zur Erstellung von Bohrlöchem in Gestein, Beton, Mauerwerk und dergleichen weist einen hülsenförmigen Schaft auf, der eine an beiden Endabschnitten des Schafts in Öffnungen mündenden, axial verlaufende Durchgangsbohrung besitzt. An seinem einen Längsende ist der hülsenförmige Schaft mit einem Einsteckende für den Anschluss an ein Bohrgerät ausgestattet. Am gegenüberliegenden freien Vorderende trägt er einen Schneiden aufweisenden Bohrkopf aus Schneidwerkstoff, der in wenigstens einem, vorzugsweise etwa radial verlaufenden Schlitz geführt ist. Der in den Schaft eingebettete Abschnitt des Bohrkopfs ist über einen wesentlichen Teil seines Umfangs in flächiger Anlage zum Material des Schaftes und ist fest mit dem Schaftmaterial verbunden.

Durch die Halterung des Bohrkopfes in wenigstens einem, vorzugsweise radial ausgerichteten Schlitz und durch die erfindungsgemässe Ausbildung des in den Schaft eingebetteten Abschnittes des Bohrkopfes ist der Bohrkopf über einen grösseren Bereich seines Umfangs vom Schaft geführt und unterstützt. Dadurch müssen die im Betrieb auftretenden Scherkräfte nicht im wesentlichen allein vom Bohrkopf aufgenommen werden. Infolge der flächigen Anlage wenigstens eines Teils des Bohrkopfes zum Schaftmaterial und der festen Verbindung dieses Abschnitts mit dem Schaftmaterial, beispielsweise durch Löten oder durch Schweissen, werden auch die im Betrieb auf das Bohrwerkzeug ausgeübten axialen Schläge besser über den Schaft abgeleitet, und es wird die Belastung des Bohrkopfs verringert.

Die Übereinstimmung eines Grossteils der Aussenkontur des in den Schaft eingebetteten Abschnittes des Bohrkopfs mit der Kontur der Innenwandung des Schafts führt insbesondere zu einer Verdickung des Bohrkopfs im zentralen Schneidenbereich. Dadurch ist gerade derjenige Bereich des Bohrkopfs verstärkt ausgebildet, der im Betrieb die grössten axialen Schlagenergien aufnehmen muss. Obwohl der zentrale Schneidenbereich in axialer Richtung üblicherweise keine Abstützung aufweist, ist wegen der Verstärkung die Gefahr eines Brechens des Bohrkopfes infolge der axialen Schläge reduziert. Der Bohrkopf wird praktisch über seinen gesamten Umfang vom Schaft unterstützt und kann die auf ihn im Betrieb einwirkenden Scherkräfte bestmöglich an den Schaft weiterleiten. Die Führung des Bohrkopfs in wenigstens einem Schlitz im Schaftvorderende und die gewählte Geometrie des Bohrkopfes vereinfachen auch die Montage des Bohrkopfs. Durch das Übereinstimmen der Aussenkontur eines Grossteils des eingebetteten Abschnitts des Bohrkopfs mit der Innenkontur des Schafts kann der Bohrkopf auch über einen grösseren Bereich seines Umfangs mit dem Schaft verlötet oder verschweisst werden, wodurch die Gefahr eines Lösens des Bohrkopfes im Betrieb verringert ist.

Der hülsenförmige Schaft aus Stahl steht der Steifigkeit eines Bohrerschaftes üblicher Bauart in keiner Weise nach. Die Herstellung der Stahlhülse ist kostengünstig, insbesondere solange sie glattwandig ausgebildet ist. Auch ist es nicht mehr erforderlich, einen Stahlstab in einem aufwendigen Fertigungsvorgang mit einer axialen Bohrung zu versehen. Vielmehr ist die Stahlhülse in den erforderlichen Aussendurchmessem und mit dem gewünschten Bohrungsdurchmesser sehr einfach in einem Endlosverfahren herstellbar. Je nach Bedarf kann sie auf die gewünschte Länge abgeschnitten werden.

Die Durchgangsbohrung steht im Vorderabschnitt des Schafts mit wenigstens eines Mündungsöffnung in Verbindung, die gegenüber den Schneiden des Bohrkopfs zurückgesetzt ist. Dadurch wird einem Verstopfen der Mündungsöffnung, beispielsweise bei noch ungenügender Saugleistung zu Beginn eines Bohrvorgangs entgegengewirkt. Vorzugsweise ist die Mündungsöffnung auch in Richtung des Schaftmantels orientiert. Dies verringert die Gefahr eines Verstopfens der Öffnung noch weiter. Die Querschnittform der Mündungsöffnung wird aus fertigungstechnischen Gründen mit Vorteil kreisförmig, elliptisch oder oval gewählt. Eine gekrümmte Umfangskontur der Mündungsöffnung weist auch keine Unregelmässigkeiten auf, die als Haftstellen für das angesaugte Bohrklein dienen könnten.

In einer Variante der Erfindung steht die Durchgangsbohrung des Schaftes mit wenigstens einer Öffnung in Verbindung, die von der Mündung eines im Bohrkopf vorgesehenen, gegenüber der Durchgangsbohrung vorzugsweise unter einem Winkel von 10° bis 70° geneigt verlaufenden Kopfkanals gebildet ist. Die Mündungsöffnung im Bohrkopf ist gegenüber den Schneiden am Bohrkopf axial und seitlich versetzt. Der seitliche Versatz ist dabei vorzugsweise derart gewählt, dass die Mündungsöffnung der in Drehrichtung nacheilenden Schneide in einem Winkelabstand vorläuft, der kleiner ist als 90°. Die gewählte axiale und seitlich versetzte Anordnung der wenigstens einen Mündungsöffnung verhindert, dass sie vollständig in das abgebaute Material am Bohrlochgrund eintaucht. Auf diese Weise bleibt die Saugleistung durch die Durchgangsbohrung im hülsenförmigen Schaft erhalten. Der Winkelabstand zur nacheilenden Schneide des Bohrkopfs gewährleistet, dass das abgebaute Material möglichst unmittelbar nach seiner Entstehung abgesaugt wird.

In einer vorteilhaften Variante der Erfindung mündet die Durchgangsbohrung des hülsenförmigen Schaftes in wenigstens einer Öffnung, die vom Bohrkopf und der Innenwandung des Schaftes begrenzt wird. Dabei wird die vorzugsweise gegenüber der Achse des Schaftes geneigte Öffnung durch eine Materialaussparung am vorderen Längsende des Schaftes und/oder am Bohrkopf gebildet. Die Mündungsöffnung ist im Fügebereich des Schafts und des Bohrkopfs angeordnet. Sie ergibt sich automatisch bei der Montage des Bohrkopfs, indem sich beispielsweise die Aussenkontur des Bohrkopfs in einem Seitenbereich zum den Schneiden gegenüberliegenden Ende verjüngt oder beispielsweise indem am Stirnende des Schafts eine Materialaussparung im Mantel vorgesehen ist. Eine oder mehrere Mündungsöffnungen sind auch durch beliebige Kombinationen von Materialaussparungen am Bohrkopf und am Schaftvorderende herstellbar.

In einer weiteren Ausführungsvariante der Erfindung ist die Mündungsöffnung der Durchgangsbohrung als Bohrung im Mantel des vorderen Schaftabschnitts ausgebildet. In diesem Fall kann die Aussenkontur des Bohrkopfes derart ausgebildet sein, dass er über seinen gesamten Umfang in flächiger Anlage zum hülsenförmigen Schaft ist. Die Bohrungen im Schaftmantel können vor oder nach der Montage des Bohrkopfes angebracht werden.

Vorzugsweise weist die wenigstens eine Mündungsöffnung eine Querschnittsfläche auf, die kleiner ist als die Querschnittsfläche der Durchgangsbohrung. Beispielsweise beträgt die Querschnittsfläche der Mündungsöffnung etwa 30% bis 70% der Querschnittsfläche der Durchgangsbohrung. Im Falle mehrerer Mündungsöffnungen ist vorzugsweise die Summe der Querschnittflächen aller Mündungsöffnungen im Vorderabschnitt des Schafts kleiner als die Querschnittsfläche der Durchgangsbohrung. Indem die Durchgangsbohrung die grössere Querschnittfläche aufweist, wird verhindert, dass Bohrklein mit einem grösseren Durchmesser als die Durchgangsbohrung angesaugt wird. Dadurch wird einem Verstopfen der Durchgangsbohrung weitgehend entgegengewirkt. Schlimmstenfalls kann die Mündungsöffnung kurzfristig verstopfen. Die Verstopfung erfolgt aufgrund der Querschnittsverhältnisse jedoch stets in einem mündungsnahen Bereich und kann sehr einfach durch Durchstossen des Materials in die breitere Durchgangsbohrung behoben werden. Zum Durchstossen kann beispielsweise ein Nagel oder eine Klammer verwendet werden. Durch die gewählten Querschnittsverhältnisse der einen oder mehreren Mündungsöffnungen zur Durchgangsbohrung wird im Bohrloch auch ein ausreichend hoher Unterdruck erzeugt, der dafür sorgt, dass das durch die Mündungsöffnung angesaugte Bohrklein immer sofort durch den Schaft abgesaugt wird. Dadurch wird verhindert, dass die Durchgangsbohrung durch eine übermässig grosse angesaugt Menge an Bohrklein, die nicht schnell genug abtransportiert werden kann, verstopft.

Indem die Durchgangsbohrung wenigstens im Einbettungsbereich des Bohrkopfes einen von der Kreisform abweichenden Querschnitt aufweist, kann der Schaft an die Abmessungen des Bohrkopfes angepasst werden, und kann die flächige Anlage des Bohrkopfes an der Innenwandung der Durchgangsbohrung verbessert werden. Beispielsweise kann der Querschnitt elliptisch oder oval sein. In einer altemativen Ausführungsvariante kann der Querschnitt auch von zwei parallelen Seiten, die durch Kreisbögen miteinander verbunden sind, gebildet sein. Auf diese Weise ist die Kontur der Innenwandung sehr gut an die üblicherweise planen Seitenflächen des Bohrkopfs angepasst. Die Durchgangsbohrung kann aber auch einen polygonalen Querschnitt aufweisen.

Der von der Kreisform abweichende Querschnitt der Durchgangsbohrung ist besonders einfach zu realisieren, wenn der hülsenförmige Schaft wenigstens im Einbettungsbereich des Bohrkopfes eine von der Kreisform abweichende Aussenkontur aufweist. Auch in diesem Fall kann die Aussenkontur elliptisch, oval, plan-kreisförmig oder auch polygonal ausgebildet sein. Bei einer Übereinstimmung des Querschnitts der Durchgangsbohrung und der Aussenkontur des Schafts weist letzterer wenigstens im Einbettungsbereich des Bohrkopfes eine konstante Wandstärke auf. Auf diese Weise werden lokale Materialschwächungen des Schaftmaterials verhindert.

In einer Variante der Erfindung ist der Vorderabschnitt des hülsenförmigen Schafts, insbesondere im Einbettungsbereich des Bohrkopfes, im wesentlichen voll ausgebildet und weist er vorzugsweise eine kleinere Querschnittsfläche auf als der nach rückwärts angrenzende Abschnitt des Schafts. Dies lässt sich beispielsweise dadurch erzielen, dass der zunächst einen gleichmässigen Querschnitt-aufweisende, rohrförmige Schaft im späteren Einbettungsbereich des Bohrkopfs im Durchmesser reduziert wird. Die Durchmesserverringerung kann soweit getrieben werden, bis im Vorderabschnitt des Schafts die Durchgangsbohrung weitgehend oder völlig geschlossen ist. Danach wird der durchmesserreduzierte Vorderabschnitt von seinem freien Vorderende her geschlitzt und der Bohrkopf eingesetzt und durch Schweissen oder Löten im Schlitz befestigt. Der eingesetzte Abschnitt des Bohrkopfs ist wenigstens entlang seiner vorzugsweis planen Seitenflächen von Vollmaterial umgeben und fest mit diesem verbunden. Bei einer Scherbeanspruchung erfährt der Bohrkopf somit eine sehr gute seitliche Abstützung durch das Schaftmaterial. Durch die Reduktion des Durchmessers der Durchgangsbohrung bzw. durch den vollständigen Verschluss derselben ist auch unterhalb des Mittenbereichs des plättchenartigen Bohrkopfs Schaftmaterial vorhanden, das der axialen Abstützung des Bohrkopfs dient. Dadurch können die im Betrieb auf den Bohrkopf einwirkenden axialen Schläge noch besser auf den Schaft abgeleitet werden.

Die mit der Durchgangsbohrung in Verbindung stehende Öffnung kann beispielsweise von der Mündung eines im Bohrkopf vorgesehenen Kopfkanals gebildet sein. Sie kann aber auch im Mantel des rohrförmigen Schafts vorgesehen sein. Es versteht sich, dass der Einbettungsbereich für den Bohrkopf auch bei konstantem Aussendurchmesser des Schafts weitgehend voll ausgebildet sein kann. Dies wird beispielsweise dadurch erzielt, dass bei der Herstellung des Bohrwerkzeugs von einem rohrförmigen Schaft mit einer Durchgangsbohrung ausgegangen wird, dessen Vorderabschnitt einen grösseren Durchmesser aufweist als der nach rückwärts angrenzende Abschnitt des Schafts. Im Laufe des weiteren Fertigungsvorgangs wird der durchmessergrössere Vorderabschnitt auf den Durchmesser des übrigen Schafts kalibriert. Dabei wird die Durchgangsbohrung im Vorderabschnitt nahezu oder vollständig geschlossen. Die Einbettung des Bohrkopfs in das Vollmaterial erfolgt dann wie zuvor geschildert.

Zur noch besseren Abstützung des Bohrkopfs im Schaft ist der Bohrkopf in wenigstens zwei, vorzugsweise etwa radial verlaufenden Schlitzen geführt, die einen kleinsten Winkelabstand von 90° bis 180° voneinander aufweisen. Bei dem gewählten Winkelabstand verbleibt zwischen den Schlitzen genügend Schaftmaterial zur Abstützung des eingesetzten Bohrkopfes. In einer vorteilhaften Variante der Erfindung ist der Bohrkopf in drei etwa radial verlaufenden Schlitzen geführt. Der Schaft weist wenigstens im Einbettungsbereich des Bohrkopfs eine im wesentlichen polygonartige Aussenkontur auf. Die Anordnung der Schlitze ist derart gewählt, das sie zur Mantelfläche des Vorderabschnitts unter einem Winkel von etwa 90° ± 10° verlaufen. Der Bohrkopf ist bei dieser Variante des Bohrwerkzeugs vorzugsweise als Dreischneider ausgebildet, wobei die Schneiden über den Schlitzen angeordnet sind und etwa parallel dazu verlaufen. Vorzugsweise beträgt der Winkelabstand der Schneiden etwa 120°. Ein derartig ausgebildetes Bohrwerkzeug zeichnet sich durch einen sehr gleichmässigen Angriff des abzubauenden Untergrundmaterials und durch einen guten Bohrfortschritt aus.

Im folgenden wird die Erfindung unter Bezugnahme auf in den Figuren schematisch dargestellte Ausführungsbeispiele näher erläutert. Es zeigen:
- Fig. 1: ein in eine Werkzeugaufnahme eines Hammerbohrgerätes eingesetztes erfindungsgemässes Bohrwerkzeug;
- Fig. 2: das Vorderende eines zweiten Ausführungsbeispieles des erfindungsgemässen Bohrwerkzeugs mit eingesetztem Bohrkopf im teilweisen Axialschnitt;
- Fig. 3: eine Draufsicht auf den Bohrkopf des Bohrwerkzeugs gemäss Fig. 2;
- Fig. 4: eine Draufsicht auf ein drittes Ausführungsbeispiels des erfindungsgemässen Bohrwerkzeugs mit einem gegenüber Fig. 3 modifizierten Bohrkopf;
- Fig. 5: ein viertes Ausführungsbeispiels des erfindungsgemässen Bohrwerkzeugs in einer Darstellung gemäss Fig. 2;
- Fig. 6: ein fünftes Ausführungsbeispiels des erfindungsgemässen Bohrwerkzeugs im teilweisen Axialschnitt; und
- Fig. 7: eine Draufsicht auf ein weiteres modifiziertes Bohrwerkzeug mit dreischneidigem Bohrkopf.

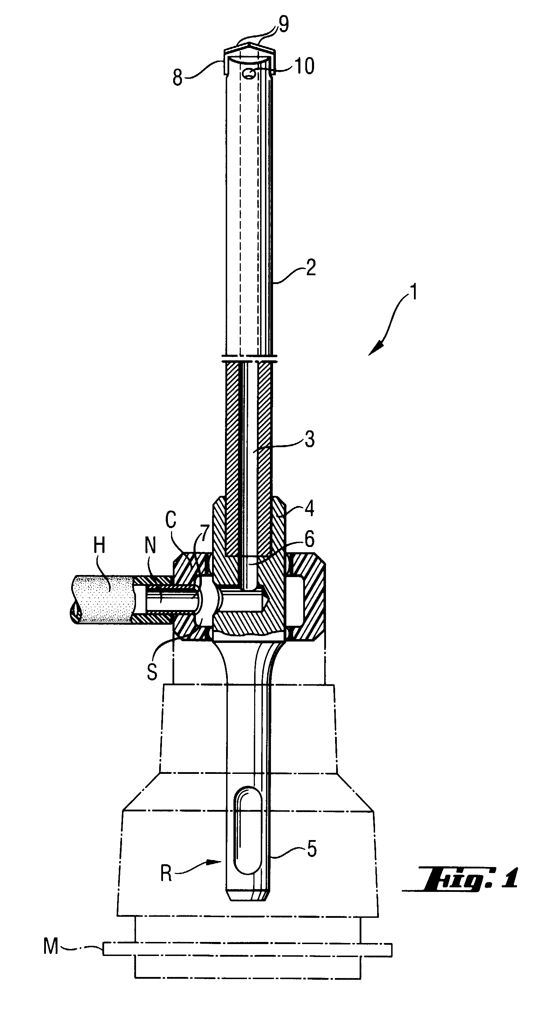

Fig. 1 zeigt ein gesamthaft mit dem Bezugszeichen 1 versehenes, erfindungsgemäss ausgebildetes Bohrwerkzeug, das in eine Werkzeugaufnahme R eines angedeuteten Bohrgeräts M, beispielsweise eines Hammerbohrgeräts, eingesetzt dargestellt ist. Das Bohrwerkzeug 1 besitzt einen hülsenförmigen Schaft 2 mit einer Durchgangsbohrung 3. Der hülsenförmige Schaft 2 ist an seinem einen Ende mit einem Anschlussteil 4 verbunden, beispielsweise verlötet, das ein Einsteckende 5 für den Anschluss an die Werkzeugaufnahme R des Bohrgeräts M aufweist. Die Durchgangsbohrung 3 steht mit einer Bohrung 6 im Anschlussteil 4 in Verbindung, die in einer Öffnung 7 am Umfang des Anschlussteils 4 mündet. In axialer Verlängerung der Werkzeugaufnahme R ist am Bohrgerät M ein drehfestes Kupplungsteil C vorgesehen, das mit einem Ringraum S ausgestattet ist, der mit der Mündungsöffnung 7 der Bohrung 6 im Anschlussteil 4 in Verbindung steht. Der Ringraum S mündet in einen Anschlussstutzen N, an den ein Absaugschlauch H angeschlossen ist. Am dem Anschlussteil 4 gegenüberliegenden Ende des hülsenförmigen Schaftes 2 ist das Bohrwerkzeug 1 mit einem Bohrkopf 8 ausgestattet, der Schneiden 9 aufweist und zur Gänze aus Hartmetall besteht. Der Bohrkopf 8 weist wenigstens einen Saugkanal auf, der gegenüber der Durchgangsbohrung 3 im Schaft 2 des Bohrwerkzeugs 1 geneigt verläuft und in einer Öffnung 10 seitlich der Schneiden 9 mündet.

Das Kupplungsteil C des Bohrgeräts M ist über den Absaugschlauch H mit einer nicht näher dargestellten Saugeinrichtung, beispielsweise einem Staubsauger, verbunden. Bei eingeschaltetem Staubsauger wird über den Absaugschlauch H, den Ringraum S, die Bohrung 6 im Anschlussteil 4, die Durchgangsbohrung 3 und den geneigten Saugkanal im Bohrkopf 8 an der Öffnung 10 seitlich der Schneiden 9 ein Unterdruck erzeugt. Durch diesen Unterdruck wird beim Bohren von den Schneiden 9 abgebautes Bohrklein durch den Bohrkopf 8, die Durchgangsbohrung 3 im hülsenförmigen Schaft und die Bohrung 6 im Anschlussteil 4 zum Absaugschlauch H abgesaugt und zum Staubsauger transportiert.

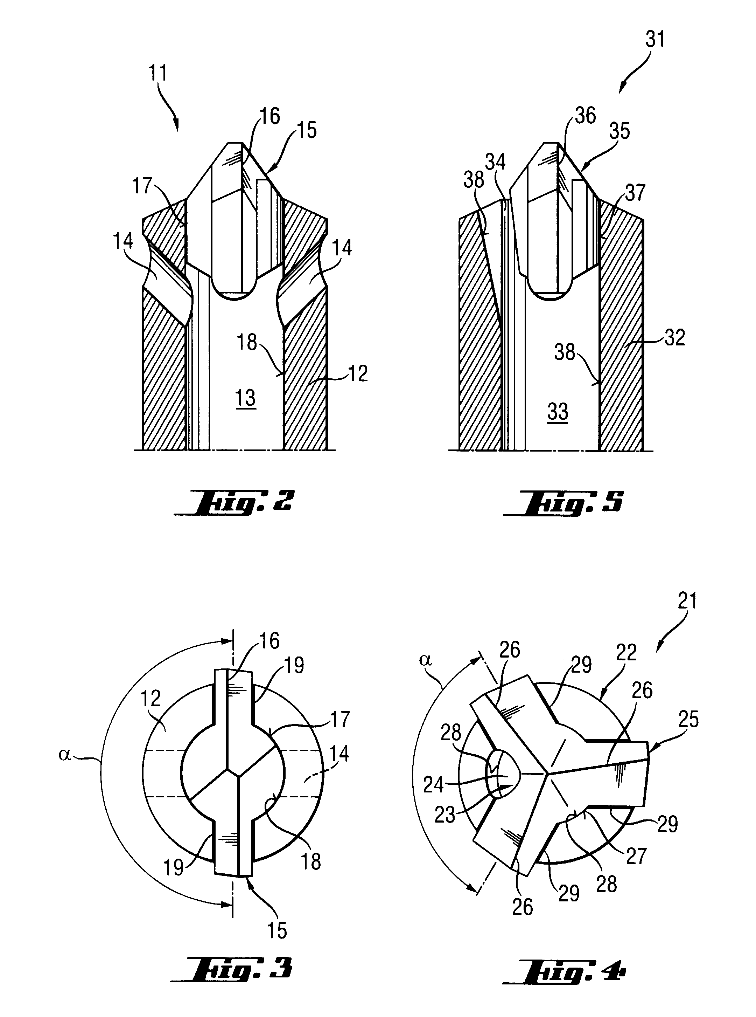

Die Darstellungen der Fig. 2 - 7 beschränken sich auf die erfindungswesentlichen Bestandteile des Bohrwerkzeugs. Bei dem Ausführungsbeispiel des gesamthaft mit 11 bezeichneten Bohrwerkzeugs gemäss Fig. 2 und 3 ist ersichtlich, dass der Bohrkopf 15 diagonal verlaufende Schneiden 16 aufweist. Die die Schneiden tragenden Abschnitte des Bohrkopfes 15 überragen den Aussendurchmesser des hülsenförmigen Schaftes 12 und sind in zwei Schlitzen 19 gelagert, die einander gegenüberliegend am Vorderende des Schaftes 12 vorgesehen sind. Der Bereich zwischen den Schneiden 16 ist auf beiden Seiten halbkreisförmig erweitert ausgebildet. Dabei ist die Aussenkontur 17 der Erweiterung auf die Kontur der Innenwandung 18 der Durchgangsbohrung 13 des hülsenförmigen Schaftes 12 abgestimmt. Der über die Erweiterungen gemessene Durchmesser des Bohrkopfs 15 entspricht dem Durchmesser der Durchgangs- bohrung 13. Durch diese Massnahme ist gewährleistet, dass der Bohrkopf 15 über einen wesentlichen Teil seines Umfangs in flächiger Anlage zur Innenwandung 18 des Schaftes 12 ist. Durch Löten oder durch Schweissen ist der in den Schaft 12 eingebettete Abschnitt des Bohrkopfs 15 fest mit dem Schaftmaterial verbunden. Auf diese Weise ausgebildet ist der Bohrkopf 15 über seinen gesamten Umfang in den Schlitzen 19 am Vorderende des Schaftes 12 und von der Innenwandung 18 des Schaftes 12 geführt und gehalten. Im Bereich des Vorderendes des Schaftes 12 sind im Mantel Öffnungen 14 vorgesehen, die mit der Durchgangsbohrung 13 in Verbindung stehen.

Fig. 4 zeigt eine zu Fig. 3 analoge Draufsicht eines Bohrwerkzeugs 21 mit modifiziertem Bohrkopf 25. Der Bohrkopf 25 weist drei Schneiden 26 auf, die vorzugsweise im Winkelabstand von etwa 120° voneinander verlaufen. Die die Schneiden 26 tragenden Abschnitte des Bohrkopfes 25 überragen den Umfang des hülsenförmigen Schaftes 22 und sind in drei korrespondierenden Schlitzen 29 im Vorderende des Schaftes 22 gelagert. Zwei der Bereiche zwischen den die Schneiden 26 tragenden Abschnitten des Bohrkopfes 25 weisen Erweiterungen auf, deren Aussenkontur 27 mit der Kontur der Innenwandung 28 des Schaftes 22 derart übereinstimmen, dass sich eine flächige Anlage ergibt. Im dritten Bereich zwischen zwei Schneiden 26 ist am Bohrkopf 25 eine Materialaussparung vorgesehen. Durch diese Materialaussparung ergibt sich eine Mündungsöffnung 24 der Durchgangsbohrung 23, die von der Wandung des Bohrkopfes 25 und der Innenfläche 28 des hülsenförmigen Schaftes 22 begrenzt ist.

Fig. 5 zeigt eine weitere Variante eines erfindungsgemässen Bohrwerkzeuges 31. Der Bohrkopf 35 weist diagonal verlaufende Schneiden 36 auf, die an Abschnitten des Bohrkopfes 35 angeordnet sind, welche den Aussendurchmesser des hülsenförmigen Schaftes 32 überragen und in korrespondierenden Schlitzen im Vorderende des Schaftes 32 gelagert sind. Der Bohrkopf 35 weist an einer Seite einen verdickten Bereich auf, dessen Aussenkontur 37 mit der Kontur der Innenwandung des Schaftes 32 übereinstimmt. Auf der gegenüberliegenden Seite verjüngt sich der Bohrkopf 35 zu seinem im Inneren des Schaftes 32 befindlichen Abschnitt und bildet eine Mündungsöffnung 34, die von der Wandung des Bohrkopfes 35 und von der Innenwandung 38 des hülsenförmigen Schaftes 32 begrenzt ist. Dabei kann die Mündungsöffnung 34 im Schaft eine Erweiterung aufweisen, die sich vom Stirnende des Schaftes 32 schräg nach innen erstreckt.

Das in Fig. 6 dargestellte Ausführungsbeispiel des erfindungsgemässen Bohrwerkzeugs trägt gesamthaft das Bezugszeichen 41. Der Schaft ist mit 42 bezeichnet und weist einen im Durchmesser verjüngten Einbettungsabschnitt 40 für den als Bohrplättchen ausgebildeten Bohrkopf 45 mit den Schneiden 46. Der durchmesserkleinere Einbettungsabschnitt 40 des Schafts 42 ist voll ausgebildet. Dies erfolgt beispielsweise dadurch, dass der zunächst einen gleichmässigen Durchmesser aufweisende, rohrförmige Schaft 42 im späteren Einbettungsbereich 40 für den Bohrkopf 45 im Durchmesser reduziert wird. Die Durchmesserverringerung kann soweit getrieben werden, bis im Vorderabschnitt 40 des rohrförmigen Schafts 42 die Durchgangsbohrung 43 weitgehend oder völlig geschlossen ist. Danach wird der durchmesserreduzierte Vorderabschnitt 40 von seinem freien Vorderende her geschlitzt und der Bohrkopf 45 in den Schlitz 49 eingesetzt und durch Schweissen oder Löten befestigt. Die im wesentlichen planen Seitenflächen 47 des Bohrkopfs 45 sind in flächiger Anlage zu den Seitenwänden 48 des Aufnahmeschlitzes 49 für den Bohrkopf 45 und fest mit diesen verlötet oder verschweisst. Die Durchgangbohrung 43 mündet in Öffnungen 44, die unterhalb des Einbettungsbereichs 40 für den Bohrkopf 45 angeordnet sind.

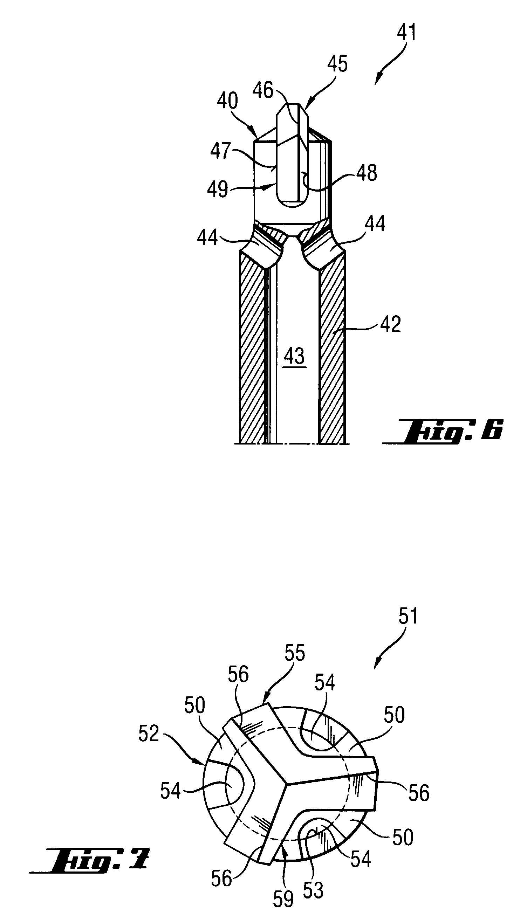

Fig. 7 zeigt ein weiteres Ausführungsbeispiel des erfindungsgemässen Bohrwerkzeugs, das gesamthaft mit dem Bezugszeichen 51 versehen ist, in Draufsicht. Das Bohrwerkzeug 51 weist einen Schaft 52 auf, dessen Querschnitt von der Kreisform abweicht. Der als Einbettungsabschnitt für den Bohrkopf 55 dienende Vorderabschnitt 50 des Schafts 52 ist mit Einbuchtungen versehen. Die Einbuchtungen sind derart angeordnet, dass der mit drei Schneiden 56 versehene Bohrkopf 55 eine möglichst grosse Lötfläche vorfindet. Daraus ergibt sich für den Einbettungsabschnitt 50 eine im wesentlichen polygonartige Aussenkontur. Die Schlitze 59 zur Aufnahme des Bohrkopfs 55 sind derart angeordnet, dass sie zur Mantelfläche des Einbettungsabschnitts 50 in einem Winkel von etwa 90° ± 10° verlaufen. Mündungsöffnungen 54 im Mantel des Schafts 52 stehen in Verbindung mit der Durchgangsbohrung 53. Dabei ist jeder Schneide 56 des Bohrkopfs 55 eine Mündungsöffnung 54 zugeordnet. Die Anordnung der Mündungsöffnungen ist derart, dass der Winkelabstand zwischen der in Drehrichtung nacheilenden Schneide 56 und der vorauseilenden Mündungsöffnung kleiner ist als 90°.

Wie insbesondere aus den Draufsichten in Fig. 3, 4 und 7 ersichtlich ist, sind die die Schneiden 16, 26, 56 tragenden Abschnitte des Bohrkopfes 15, 25, 55 in Schlitzen 19, 29, 59 gelagert, die jeweils in einem Winkelabstand a von vorzugsweise 90° bis 180° voneinander am Vorderende des Schaftes 12, 22, 52 angeordnet sind. Aus allen Darstellungen ist ersichtlich, dass die Mündungsöffnungen 10, 14, 24, 34, 44, 54 jeweils eine kleinere Querschnittsfläche aufweisen als die Durchgangsbohrung 3, 13, 23, 33, 43, 53. Mit Vorteil betragen die Querschnittsflächen der Mündungsöffnungen 10, 14, 24, 34, 44, 54 etwa 30% bis 70% der Querschnittsfläche der Durchgangsbohrung 3, 13, 23, 33, 43, 53. Im Fall mehrerer Mündungsöffnungen ist die Summe ihrer Querschnittsflächen vorzugsweise kleiner als Querschnittsfläche der Durchgangsbohrung. In den dargestellten Ausführungsbeispielen sind jeweils etwa kreisförmige Durchgangsbohrungen 3, 13, 23, 33, 43, 53 dargestellt. Es versteht sich, dass in einer altemativen Ausführungsvariante der Querschnitt der Durchgangsbohrung des hülsenförmigen Schaftes auch von der Kreisform abweichen kann, falls es für die bessere Einbettung des Bohrkopfes erforderlich ist. Beispielsweise könnte er elliptisch sein oder auch die Form eines Polygons aufweisen. Auch ist es für die Durchführung der Erfindung nicht wesentlich, dass der hülsenförmige Schaft eine kreisförmige Aussenkontur aufweist. Der Schaft könnte beispielsweise auch elliptisch sein oder, wie in Fig. 7 angedeutet ist, die Form eines Dreiecks mit gekrümmten Seitenlinien besitzen oder auch die Form eines regelmässigen Sechseckes aufweisen.

Das erfindungsgemässe Bohrwerkzeug 1 ist in Fig. 1 anhand eines mit dem Schaft verlöteten Anschlussteils 4 mit Einsteckende 5 erläutert worden. Das Anschlussteil 4 kann beispielsweise auch durch Reibschweissen mit dem Schaft 2 verbunden sein. Es versteht sich, dass das Einsteckende beispielsweise auch direkt am hülsenförmigen Schaft ausgebildet sein kann. In diesem Fall ist eine modifizierte Werkzeugaufnahme mit integrierter Absaugeinrichtung erforderlich. Das erfindungsgemässe Bohrwerkzeug ist in seiner Anwendung als Saugbohrer beschrieben worde. Es versteht sich, dass das geschilderte Bohrwerkzeug auch im umgekehrten Betrieb einsetzbar ist. Beispielsweise kann die Durchgangsbohrung mit ihren Mündungen auch für die Spülung einer Bohrung mit Luft oder einer Spülflüssigkeit verwendet werden.

## Patentansprüche

1. Bohrwerkzeug zur Erstellung von Bohrlöchem in Gestein, Beton, Mauerwerk und dergleichen, mit einem hülsenförmigen Schaft (2; 12; 22; 32; 42; 52), der eine axial verlaufende Durchgangsbohrung (3; 13; 23; 33; 43; 53) besitzt, die an den Endabschnitten des Schafts in Öffnungen (7, 10; 14; 24; 34; 44; 54) mündet, an seinem einen Längsende mit einem Einsteckende (5) für den Anschluss an ein Bohrgerät (M) ausgestattet ist und am gegenüberliegenden freien Vorderende einen Schneiden (9; 16; 26; 36; 46; 56) aufweisenden Bohrkopf (8; 15; 25; 35; 45; 55) aus Schneidwerkstoff trägt, der in wenigstens einem, vorzugsweise etwa radial verlaufenden Schlitz (19; 29; 49; 59) im freien Vorderende des Schafts (2; 12; 22; 32; 42; 52) geführt ist, **dadurch gekennzeichnet,** dass der in den Schaft (2; 12; 22; 32; 42; 52) eingebettete Abschnitt des Bohrkopfs (8; 15; 25; 35; 45; 55) über einen wesentlichen Teil seines Umfangs in flächiger Anlage zum Material des Schafts ist und fest mit dem Schaftmaterial verbunden ist.

2. Bohrwerkzeug nach Anspruch 1, dadurch gekennzeichnet, dass der in den Schaft (2; 12; 22; 32) eingebettete Abschnitt des Bohrkopfs (8; 15; 25; 35) über einen Grossteil seines Umfangs eine Aussenkontur (17; 27; 37) aufweist, die weitgehend der Kontur der Innenwandung (18; 28; 38) des hülsenförmigen Schaftes (2; 12; 22; 32) entspricht und flächig an der Innenwandung (18; 28; 38) anliegt.

3. Bohrwerkzeug nach Anspruch 1 oder 2, dadurch gekennzeichnet, dass die wenigstens eine Mündungsöffnung (10; 14; 24; 34; 44; 54) der Durchgangsbohrung (3; 13; 23; 33; 43; 53) gegenüber den Schneiden (9; 16; 26; 36; 46; 56) des Bohrkopfs (8; 15; 25; 35; 45; 55) zurückgesetzt ist und vorzugsweise im wesentlichen in Richtung des Mantels des Schafts (2; 12; 22; 32; 42; 52) orientiert ist.

4. Bohrwerkzeug nach Anspruch 3, dadurch gekennzeichnet, dass die Durchgangsbohrung (3) des Schafts (2) mit wenigstens einer Öffnung (10) in Verbindung steht, die von der Mündung eines im Bohrkopf (8) vorgesehenen, gegenüber der Durchgangsbohrung (3) vorzugsweise in einem Winkel von 10° bis 70° geneigt verlaufenden Kopfkanals gebildet ist.

5. Bohrwerkzeug nach Anspruch 3, dadurch gekennzeichnet, dass die Durchgangsbohrung (23; 33) des hülsenförmigen Schaftes (22; 32) in wenigstens einer Öffnung (24; 34) mündet, die vom Bohrkopf (25; 35) und der Innenwandung (28; 38) des Schaftes (22; 32) begrenzt wird und durch eine Materialaussparung am vorderen Längsende des Schafts (22; 32) und/oder am Bohrkopf (25; 35) gebildet ist.

6. Bohrwerkzeug nach Anspruch 3, dadurch gekennzeichnet, dass wenigstens eine Mündungsöffnung (14; 44; 54) der Durchgangsbohrung (13; 43; 53) als Bohrung im Mantel des vorderen Schaftabschnitts ausgebildet ist.

7. Bohrwerkzeug nach einem der vorangehenden Ansprüche, dadurch gekennzeichnet, dass die wenigstens eine Mündungsöffnung (10; 14; 24; 34; 44; 54) der Durchgangsbohrung (3; 13; 23; 33; 43; 53) eine Querschnittsfläche aufweist, die kleiner ist als die Querschnittsfläche der Durchgangsbohrung (3; 13; 23; 33; 43; 53) und vorzugsweise 30% bis 70% der Querschnittsfläche der Durchgangsbohrung (3; 13; 23; 33; 43; 53) beträgt.

8. Bohrwerkzeug nach einem der vorangehenden Ansprüche, dadurch gekennzeichnet, dass die Durchgangsbohrung (53) wenigstens im Einbettungsbereich (50) für den Bohrkopf (55) einen von der Kreisform abweichenden Querschnitt aufweist.

9. Bohrwerkzeug nach einem der vorangehenden Ansprüche, dadurch gekennzeichnet, dass der hülsenförmige Schaft (52) wenigstens im Einbettungsbereich (50) für den Bohrkopf (55) eine von der Kreisform abweichende Aussenkontur aufweist.

10. Bohrwerkzeug nach einem der vorangehenden Ansprüche, dadurch gekennzeichnet, dass der Vorderabschnitt (40) des hülsenförmigen Schafts (42), insbesondere im Einbettungsbereich für den Bohrkopf (45), im wesentlichen voll ausgebildet ist und vorzugsweise eine kleinere Querschnittsfläche aufweist als der angrenzende Abschnitt des Schafts (42).

11. Bohrwerkzeug nach einem der vorangehenden Ansprüche, dadurch gekennzeichnet, dass der Bohrkopf (8; 15; 25; 35; 55) in wenigstens zwei, vorzugsweise etwa radial verlaufenden Schlitzen (19; 29; 59) geführt ist, die einen kleinsten Winkelabstand (α) von 90° bis 180° voneinander aufweisen.

12. Bohrwerkzeug nach Anspruch 11, dadurch gekennzeichnet, dass der Bohrkopf (55) in drei etwa radial verlaufenden Schlitzen (59) geführt ist, die bei einer im wesentlichen polygonartigen Aussenkontur des vorderen Schaftabschnitts (50) unter einem Winkel von etwa 90° ± 10° zur Mantelfläche des Vorderabschnitts (50) verlaufen.
